# EUROPEAN PATENT APPLICATION

(11) **EP 0 962 134 A1**
(43) Date of publication of application: **08.12.1999**
(21) Application number: 99303656.5
(22) Date of filing: 11.05.1999
(51) Int. Cl.: A01N 25/14

(54) **A process for preparing a wettable powder formulation**

(30) Priority: 27.05.1998 US 86942 P
(71) Applicant: ROHM AND HAAS COMPANY, Philadelphia, Pennsylvania 19106-2399 (US)
(72) Inventor: Houghton, Richard David, Harleysville, Pennsylvania 19438 (US); Jackson-Dreux, Janeen Yvette, Mount Laurel, New Jersey 08054 (US)
(74) Representative: Buckley, Guy Julian

(57) **Abstract**

This invention relates to a process to prepare wettable powder formulations of compounds which incompletely or slowly recrystallize after impregnation onto the wettable powder carrier.

The process comprises the steps of:
a) forming a wettable powder by impregnating a carrier with a compound which does not reach its final level of crystallization upon formation of the wettable powder;
b) holding the wettable powder until the compound reaches its final level of crystallization; and
c) milling the wettable powder.

## Description

This invention relates to a process to prepare wettable powder formulations of compounds which incompletely or slowly recrystallize when cooled from a melted state or solidified by removal of a dissolving solvent. The process provides wettable powder formulations with improved stability in that the powder's particle size does not increase during storage.

Typically, wettable powder formulations of compounds, particularly pesticidal compounds, are prepared by impregnating the compound onto a solid carrier, and then immediately milling the impregnated carrier to a small particle size. Small particle size wettable powders are desirable because they exhibit good suspension properties in water and often provide improved efficacy when compared with large particle size wettable powder formulations. Ideally, compounds which make good wettable powder formulations have a high heat of fusion, a high melting point, a small melting half peak width, and fast recrystallization kinetics when the melting and recrystallization characteristics of the powder are evaluated by Differential Scanning Calorimetry ("DSC"). We have found that with compounds which have slow recrystallization kinetics, the resulting wettable powders often deteriorate upon standing, primarily because the particles form agglomerates. There is a need, therefore, for stable wettable powder formulations of compounds which have slow recrystallization kinetics.

We have discovered that a stable wettable powder is produced by waiting for the compound to reach its final level of crystallization after impregnating the carrier and before milling the powder to its final particle size. This invention, therefore, is a process for preparing a wettable powder formulation, comprising the steps of:
a) forming a wettable powder by impregnating a carrier with a compound which does not reach its final level of crystallization upon formation of the wettable powder;
b) holding the wettable powder until the compound reaches its final level of crystallization; and
c) milling the wettable powder.

Preferably, the forming step includes an initial milling after impregnating the carrier with the compound.

The term "impregnating" means the process of distributing a compound onto the surface, the interior, or both, of a solid carrier. Impregnating can be accomplished in a variety of ways including; a) dissolving the compound in a solvent, blending the dissolved compound with the carrier, and removing the solvent; b) melting the compound, blending the melted compound with the carrier, and cooling the blend; c) physically blending solidified, but not necessarily crystallized, compound with the carrier; and d) similar methods known to those skilled in the formulation arts.

The term "carrier" means one or more solid diluents which, when the compound is a pesticide, is any substance which can be used to dissolve, disperse or diffuse the pesticide in a composition without impairing the pesticide's effectiveness and which by itself has no significant detrimental effect on the soil, equipment, desirable plants, or agronomic environment. Carriers include, for example, ground natural minerals such as kaolins, clays, talc, chalk, quartz, attapulgite, montmorillonite, calcite, marble, pumice, sepiolite, dolomite, and diatomaceous earth; ground synthetic minerals, such as highly dispersed silicic acid, alumina, and silicates; synthetic granules of inorganic and organic meals; granules of organic material such as sawdust, coconut shells, corn cobs, and tobacco stalks; synthetic polymeric materials; and the like. Similar carriers are utilized for preparation of formulations of pharmaceutically active compounds wherein the carrier is intended to have no significant detrimental effect on the organism treated with the pharmaceutically active compound such as, for example, starch, calcium carbonate, diatomaceous earth, and the like. It is also contemplated that the process of this invention may be used in the preparation of cosmetic formulations wherein agglomeration resulting from an incompletely crystallized component of the cosmetic formulation is to be avoided.

The term "compound" means any compound which has slow recrystallization kinetics resulting in wettable powder formulations of the compound which agglomerate upon standing. "Slow recrystallization kinetics" means that the compound has not reached its final level of crystallization until after the wettable powder is formed and milled to the powder's final particle size. Typical compounds include pesticides such as, for example, dicofol, oxyfluorfen, myclobutanil, and thiazopyr; pharmaceuticals, and cosmetic ingredients.

The term "holding" means allowing the wettable powder to stand without further processing until the compound reaches its final level of crystallization or in which the rate of further crystallization is insignificant. For purposes of this invention, an insignificant change is one in which the rate of change is such that the wettable powder does not suffer adverse physical changes, such as agglomeration, upon standing.

The term "milling" means to mechanically reduce the particle size of the wettable powder. Typical milling techniques include air milling, hammer milling, crushing (jaw, gyratory cone, roller, impact), impact milling (stationary plates), tumble milling with grinding media (balls, rods), roller milling (feeding through a small gap), pin milling, jet air milling (spiral, opposed, fluidized), and the like.

The process of this invention is also useful for forming wettable powder formulations of mixtures of two or more compounds wherein one or more of the compounds in the mixture has not reached its final level of crystallization.

The term "final level of crystallization" means the compound is solidified in the form of crystals as opposed to a glass or other amorphous solid and that the proportion of compound present as crystals is stable. For purposes of this invention it is not necessary that the compound be in a completely crystallized state. Preferably, the compound will be at least 50% crystallized, more preferably at least 80% crystallized, most preferably at least 95% crystallized. Because high melting point compounds tend to be highly crystalline and to rapidly crystallize, compounds with melting points between 50 °C and 100 °C are more amenable to the process of this invention. Any uncrystallized compound may be in the form of either a liquid or a solid, such as a glass. What is necessary, however, is that the rate of conversion of the compound from a non-crystalline to a crystalline state becomes low and, as a result, the formation of agglomerates is reduced. Because the extent of wettable powder agglomeration is directly related to the rate of conversion of the compound from the non-crystalline to crystalline state, a balance exists between the holding time and the resulting extent of agglomeration. For this reason, it is important to understand the crystallization kinetics of the compound.

Differential Scanning Calorimetry is a technique which is often used to study the crystallization kinetics of a material. DSC measures the heat changes associated with endothermic and exothermic processes such as fusion, evaporation, crystallization, and glass transitions. In DSC, a pan containing the sample to be analyzed and an empty reference pan, or a reference pan containing a reference material, are heated and cooled simultaneously while being maintained at identical temperatures. Any endothermic or exothermic process occurring in the sample pan which does not occur in the reference pan will require a compensating amount of heat to keep the two pans at the same temperature. The compensating heat flow is measured by DSC and typically graphed as Heat Flow vs. Temperature. A highly crystalline material will exhibit an endothermic peak upon heating past its melting point and an exothermic peak when cooled to below its melting point. Integrating the area of a peak provides a measure of the heat of fusion of the sample. DSC analysis of the compound and the formulation at various times allows determination of the degree of crystallinity and the rate of crystallization, that is, the crystallization kinetics.

There are a number of ways to determine when a compound reaches its final level of crystallization. One method is to form the wettable powder, analyze a sample of the powder by DSC to determine "baseline" crystallization properties and then analyze additional samples of the powder over time. When the crystallization properties become stable, the compound can be considered to be at its final level of crystallization. An alternate method is to form the wettable powder, mill it once, analyze a sample by DSC, and then analyze additional samples over time. A further method is to analyze newly prepared wettable powder and compare its DSC with that of old wettable powder in which the compound has reached its final level of crystallization. A still further method is to compare the crystallization properties of a pure compound with those of the compound when impregnated on the carrier over time. In each of these cases the key aspect is the rate of change in the crystallization properties and the resulting physical properties of the wettable powder such as, for example, agglomeration. Initially, the properties will change rapidly over time. When the compound reaches its final level of crystallization, the properties will not change rapidly over time.

The extent of agglomeration of any particular formulation will be dependent upon the compound itself, other ingredients which are also used in the formulation, their respective crystallization kinetics and concentration in the formulation, and the type of carrier used. A certain amount of agglomeration can be tolerated in any formulation depending upon the desired physical properties of the formulation and its method of use. DSC analysis of a formulation enables evaluation of the amount and rate of crystallization of the compound. This, in turn, allows determination of the appropriate holding period so that the extent of agglomeration will be limited to what can be tolerated.

Alternatively, the extent of agglomeration may be determined by preparing samples of a particular wettable powder formulation with varying holding times and then evaluating the resulting powder's physical properties such as, for example, particle size and/or suspensibility, after storage. This method may be viewed as an alternative to evaluating the extent of crystallization by DSC.

It is anticipated that the formulation produced by the process of this invention will, in addition to the compound and the carrier, also contain inert ingredients. Such ingredients include surfactants, dispersants, spreaders, stickers, antifoam agents, emulsifiers, and other similar materials such as those described in *McCutcheon's Emulsifiers and Detergents, McCutcheon's Emulsifiers and Detergents/Functional Materials,* and *McCutcheon*'*s Functional* *Materials,* all published annually by McCutcheon Division of MC Publishing Company (New Jersey, USA). Inert ingredients may be added to the formulation at the same time or in a separate impregnation step occurring before or after the compound is impregnated onto the carrier or in multiple impregnation steps occurring before, at the same time, and/or after the compound is impregnated onto the carrier. In the case of pesticidal compounds, this invention also contemplates formulations which include one or more additional pesticides and/or one or more fertilizing materials. Fertilizing materials may function as the carrier or may be impregnated onto the carrier at any stage of the process.

The following examples illustrate the process of this invention.

### DSC Analysis Method

Approximately 10 mg of the sample to be analyzed is placed in the sample pan of the DSC. The reference pan is either empty or contains approximately 10 mg of a reference sample. The pans are equilibrated to 25 °C, heated at 5 °C per minute to a temperature 20 °C above the sample's melting point, cooled at 5 °C per minute to -40 °C, re-heated at 5 °C per minute to 20 °C above the sample's melting point, and equilibrated to 25 °C. The first heating step provides an evaluation of the melting point and heat of fusion of the sample. The cooling step provides an evaluation of the crystallization temperature and heat of crystallization. The second heating step provides an evaluation of the percent of the sample which is crystallized. This procedure also allows determination of a sample's glass transition temperature, should such a transition occur.

### Compound Evaluation by DSC

The following samples were evaluated by DSC:

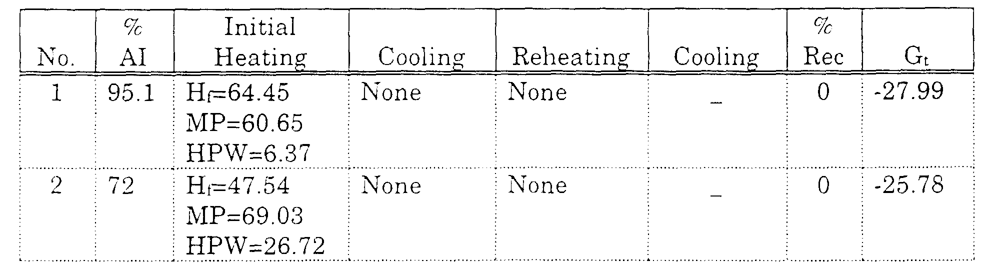

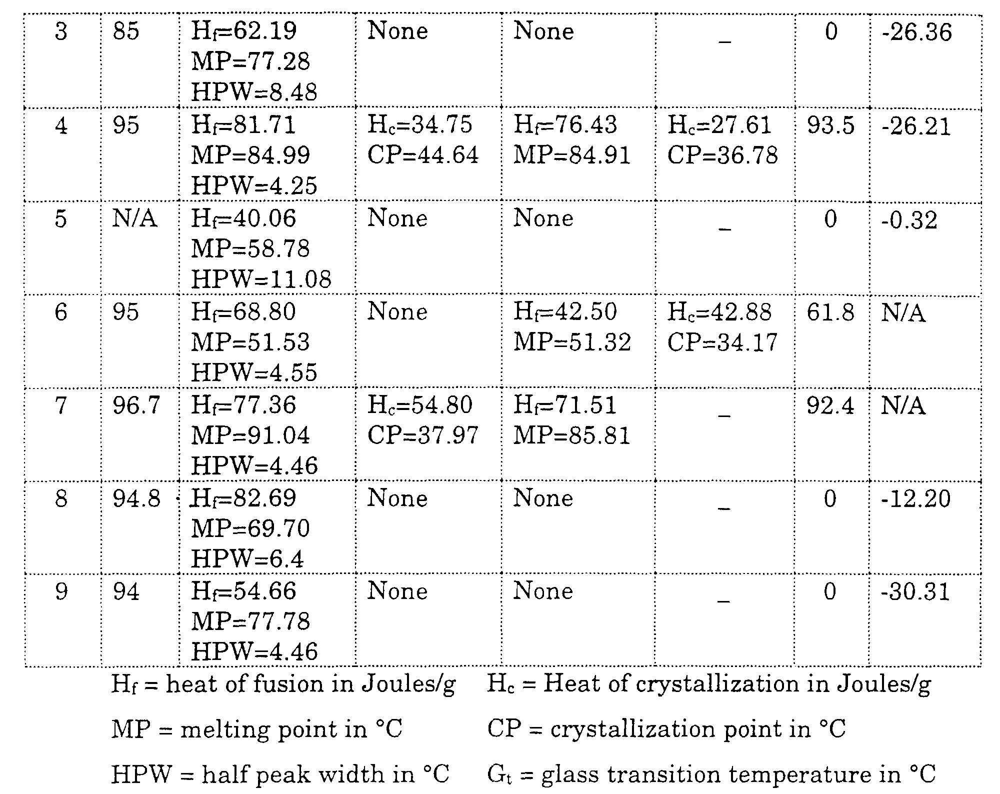

### Samples

1 = dithiopyr herbicide - S,S'-dimethyl 2-(difluoromethyl-4-(2-methylpropyl)-6-(trifluoromethyl)-3,5-pyridinedicarbothioate
2 = oxyfluorfen herbicide - 2-chloro-1-(3-ethoxy-4-nitrophenoxy)-4-trifluoromethylbenzene
3 = oxyfluorfen
4 = oxyfluorfen
5 = dicofol acaricide - 2,2,2-trichloro-1,1-bis(4-chlorophenyl)ethanol
6 = Ethyl (3-tert-butyl-1-dimethylcarbamoyl-1H-1,2,4-triazolyl-5-ylthio)acetate
7 = propanil herbicide - N-(3,4-dichlorophenyl)propanamide
8 = myclobutanil fungicide - α-butyl-α-(4-chlorophenyl)-1H-1,2,4-triazoly-1-propanenitrile
9 = thiazopyr herbicide - Methyl 2-difluoromethyl-4-isobutyl-5-(4,5-dihydro-2-thiazolyl0-6-trifluoromethyl-3-pyridinecarboxylate

These data indicate that because of their high heats of fusion, high melting points, and small half peak widths, samples 4 and 7 are less susceptible to product instability due to recrystallization after preparation of a wettable powder formulation. On the other hand, samples 2, 3, and 5 are likely to have product instability problems. Predicting the product stability of samples 1, 6, 8, and 9 is difficult. Determination of the utility of this invention with these samples must be based on evaluatibn of the particular wettable powder product produced using methods such as those described below.

### Evaluation of Product Produced by the Method

A wettable powder formulation of dicofol was prepared with the following composition by spraying melted dicofol technical onto the carrier and then dry blending in the other components:

| Component | % by weight |
|---|---|
| Dicofol technical | 52.5 |
| Silica based carrier | 42.5 |
| Calcium lignin sulfonate | 4.0 |
| Sodium naphthalenesulfonate | 1.0 |

The initial composition was immediately passed through a hammer mill resulting in a wettable powder with a median particle size of 5-10 microns. At this point in the process the dicofol has not reached its final level of crystallization.

Subsamples of the wettable powder were then subjected to the following eight different air milling processes:

| Example | # Air Millings | Hold Timing |
|---|---|---|
| A | 1 | Immediately |
| B | 2 | Immediately plus 2^{nd} milling immediately after the first |
| C | 1 | Immediately with slow feed rate |
| D | 1 | After 24 hours |
| E | 2 | Immediately plus 2^{nd} milling after 48 hours |
| F | 1 | After 48 hours |
| G | 2 | Immediately plus 2^{nd} milling after 13 days |
| H | 1 | After 13 days |

Each of the resulting materials was evaluated by DSC to determine the level of dicofol crystallization and further evaluated for physical properties (suspensibility and particle size) over time and compared to dicofol technical (Example X) and the hammer milled only wettable powder (Example Y). The results of these evaluations are in the following table:

| Ex | Property | Initial | 24 hr | 48 hr | 72 hr | 7 d | 14 d⁴ | 28 d | 2 mo | 3 mo |
|---|---|---|---|---|---|---|---|---|---|---|
| X | DSC¹ % Susp.² Part. size³ | 0 | 0.9 | 2.7 | 3.9 | 8.9 | | | | 11.5 |
| Y | DSC % Susp. Part. size | 0.9 | 5.6 | 7.3 | 8.8 | 10.3 | 10.5 | | | 9.6 |
| A | DSC % Susp. Part. size | 4.7 78 7 | 9.2 11 | 9.2 | 9.1 | 9.4 66 12 | 10.0 63 12 | 46 13 | 56 14 | 10.4 58 13 |
| B | DSC % Susp. Part. size | 7.7 96 3 | 8.0 3 | 8* | 8.0 | 9.2 94 4 | 95 3 | 91 4 | 93 5 | 9.6 90 4 |
| C | DSC % Susp. Part. size | 8.9 94 3 | 9.8 6 | 10* | 10.4 | 10.5 82 7 | 83 7 | 79 7 | 76 9 | 9.8 73 10 |
| D | DSC % Susp. Part. size | 7.0 90 6 | 9.0 | 8.5 | 9* | 9.1 86 7 | 86 7 | 86 7 | 81 8 | 8.3 77 8 |
| E | DSC % Susp. Part. size | 9.7 91 3 | 7.8 3 | 8* | 8* | 8.3 90 3 | 90 3 | 90 3 | 84 4 | 10.7 85 4 |
| F | DSC % Susp. Part. size | 8.9 87 5 | 8.5 5 | 8.5* | 8.5* | 8.7 87 5 | 87 6 | 87 6 | 84 6 | 9.2 84 7 |
| G | DSC % Susp. Part. size | 8.9 98 2 | 9* | 9* | 9* | 9* 98 3 | 99 3 | 98 3 | 98 3 | 8.3 96 4 |
| H | DSC % Susp. Part. size | 9.5 96 4 | 9.5* | 9.5* | 9.5* | 9.5* 96 4 | 95 5 | 94 5 | 92 5 | 10.2 90 6 |

| | | | | | | | | | | |
|---|---|---|---|---|---|---|---|---|---|---|
| ¹ in Joules/gram (the value for fully crystallized dicofol is approx. 10 J/g) | | | | | | | | | | |
| ² % Suspensibility by weight | | | | | | | | | | |
| ³ median particle size in microns | | | | | | | | | | |
| ⁴ DSC data at 13 days | | | | | | | | | | |
| * Estimated DSC value | | | | | | | | | | |

The DSC data show that full crystallization is reached about 7 days after hammer milling compared to about 3 months for the dicofol technical itself. The DSC data also show that air milling reduces the time to full crystallization to about 24 - 48 hours. The DSC and physical property data show that varying combinations of hold times between millings provide wettable powders with varying properties. Therefore, by varying these procedures, one can obtain a final wettable powder product with the precise combination of properties that are wanted.

## Claims

1. A process for preparing a wettable powder formulation, comprising the steps of:
a) forming a wettable powder by impregnating a carrier with a compound which does not reach its final level of crystallization upon formation of the wettable powder;
b) holding the wettable powder until the compound reaches its final level of crystallization; and
c) milling the wettable powder.

2. The process of Claim 1 wherein the compound comprises a mixture of two or more compounds and wherein one or more of the compounds in the mixture has not reached its final level of crystallization.

3. The process of Claim 1 wherein the forming step further comprises a milling step after impregnating the carrier with the compound.

4. The process of Claim 1 wherein the compound is milled prior to impregnating the carrier.

5. The process of Claim 2 wherein one or more of the compounds is milled prior to impregnating the carrier.

6. The process of Claim 1 wherein the compound is selected from oxyfluorfen, dicofol, myclobutanil, and thiazopyr.

7. The process of Claim 1 wherein the compound is selected from dicofol and the holding step is 48 hours or more.

8. The process of Claim 1 wherein the compound is selected from dicofol and the holding step is 7 days or more.

9. A wettable powder formulation prepared by the process of Claim 1.

10. A wettable powder formulation prepared by the process of Claim 3.
